# FASCICULE DE BREVET EUROPEEN

(11) **EP 1 787 147 B1**
(45) Date de publication et mention de la délivrance du brevet: **08.06.2011**
(21) Numéro de dépôt: 05797597.1
(22) Date de dépôt: 26.08.2005
(51) Int. Cl.: G02B 3/14

(54) **LENTILLE A FOCALE VARIABLE**
VARIABLE SAMMELLINSE
VARIABLE-FOCUS LENS

(30) Priorité: 27.08.2004 FR 0451919
(43) Date de publication de la demande: 23.05.2007
(73) Titulaire: Varioptic, 69007 Lyon (FR)
(72) Inventeur: BERGE, Bruno, F-69002 LYON (FR); PESEUX, Jérôme, F-69360 SOLAIZE (FR)
(74) Mandataire: Brochard, Pascale
(86) Numéro de dépôt international: PCT/FR2005/050686
(87) Numéro de publication internationale: WO 2006/027522

(56) Documents cités:
- WO-A-2004/077125
- FR-A- 2 791 439
- PATENT ABSTRACTS OF JAPAN vol. 2002, no. 10, 10 octobre 2002 (2002-10-10) & JP 2002 169005 A (CANON INC), 14 juin 2002 (2002-06-14) & [Online] 14 juin 2002 (2002-06-14), Extrait de l'Internet: URL:http://dossier1.ipdl.ncipi.go.jp/AIPN/ aipn_call_transl.ipdl?N0000=7413&N0120=01& N2001=2&N3001=2002-169005> [extrait le 2005-03-16] Traduction automatique du document japonais alinéas [0010] - [0018], [0044] - [0051]

## Description

### Domaine de l'invention

La présente invention concerne des lentilles à focale variable et plus particulièrement de telles lentilles mettant en oeuvre la déformation d'une goutte de liquide par des phénomènes d'électromouillage.

### Exposé de l'art antérieur

Diverses réalisations de lentilles à focale variable sont décrites dans le brevet européen 1166157 de la demanderesse. La figure 1 de la présente demande reproduit sensiblement la figure 12 de ce brevet. Une cellule est définie par deux plaques isolantes 1 et 2 et des parois latérales non représentées. La plaque inférieure 2, non plane, comporte un renfoncement ou évidement 3 qui reçoit une goutte d'un liquide isolant 4. Le reste de la cellule est rempli d'un liquide conducteur de l'électricité 5, non miscible avec le liquide isolant, d'indice de réfraction différent et sensiblement de même densité. Une électrode annulaire 7 ouverte en regard de l'évidement est disposée sur la face arrière de la plaque inférieure 2. Une autre électrode 8 est en contact avec un liquide conducteur 5. Par des phénomènes d'électromouillage, il est possible, en fonction de la tension V appliquée entre les électrodes 7 et 8 de modifier la courbure de la surface de contact entre les deux liquides qui passe par exemple de la forme initiale concave désignée par la référence 4 à la forme convexe représentée en pointillés et désignée par la référence 9. Ainsi un faisceau lumineux traversant la cellule orthogonalement aux plaques 1 et 2 dans la région de la goutte 4 sera plus ou moins focalisé selon la tension appliquée.

D'autres réalisations de lentilles à focale variable sont décrites dans le document WO-A-03/069380. La figure 2 de la présente demande reproduit sensiblement la figure 1 de ce document. Une cellule est définie par deux plaques isolantes 11 et 12 et une paroi latérale cylindrique 13. La partie inférieure 2 de la cellule reçoit une goutte d'un liquide isolant 14. Le reste de la cellule est rempli d'un liquide conducteur 15, non miscible avec le liquide isolant, d'indice de réfraction différent et sensiblement de même densité. La paroi latérale cylindrique 13 contient une électrode annulaire 17. Une autre électrode 18 formée sur la face interne de la plaque supérieure 11 est en contact avec le liquide conducteur 15. Il est possible, en fonction de la tension V appliquée entre les électrodes 17 et 18, de modifier la courbure de la surface de contact entre les deux liquides qui passe par exemple de la forme initiale concave désignée par la référence 14 à la forme convexe représentée en pointillés et désignée par la référence 19. Ainsi un faisceau lumineux traversant la cellule orthogonalement aux plaques 11 et 12 dans la région de la goutte 14 sera plus ou moins focalisé selon la tension appliquée.

Bien que satisfaisantes, ces solutions présentent des inconvénients dans leur mise en oeuvre. En effet, en pratique, le liquide conducteur est généralement un liquide aqueux, et la mise en place de la goutte, généralement un liquide huileux, se fait alors que la cellule a préalablement été totalement immergée dans le liquide aqueux. L'injection de la goutte huileuse se fait au niveau du fond de la cellule, mais il peut arriver qu'on ait du mal à chasser l'eau du fond de la cellule. Le résultat peut être que la goutte se met mal en place, ou qu'on piège une goutte d'eau sous la goutte d'huile, introduisant des perturbations optiques inacceptables.

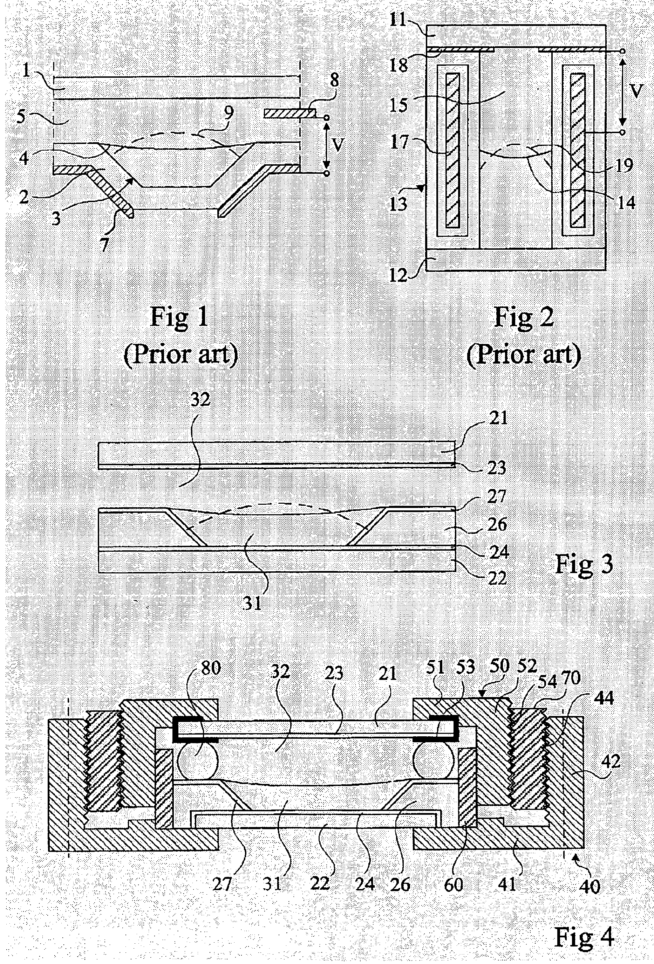

Ainsi, il est nécessaire de respecter certaines précautions opératoires pour obtenir un bon positionnement de la goutte qui est susceptible de se fractionner et d'adhérer pour partie à chacune des plaques 1 et 2 ou 11 et 12. Dans le cas de la figure 1, la goutte peut également venir pour partie au-dessus de la partie supérieure plane de la plaque inférieure 2.

Ces inconvénients se retrouvent également lors de l'utilisation de la lentille dans un environnement soumis à des chocs. En effet, sous l'effet d'une accélération, la goutte peut avoir tendance à se déformer ou à se déplacer, et à sortir du logement prévu à cet effet. Il peut être alors très délicat, voire impossible, de la repositionner correctement.

### Résumé de l'invention

Un objet de la présente invention est de pallier ces inconvénients, pour faciliter les opérations d'implantation de la goutte, et éviter que de trop forts déplacements des liquides résultent en un dépositionnement ou un fractionnement de la goutte.

Un autre objet de la présente invention est de prévoir une structure particulière de cellule de lentille à focale variable permettant d'optimiser ses paramètres.

Pour atteindre ces objets ainsi que d'autres, la présente invention prévoit une lentille à focale variable, comportant dans un espace défini entre deux parois en regard orthogonales à l'axe de la lentille, un liquide isolant sur une première des parois, et un liquide conducteur, recouvrant le liquide isolant et venant au contact de la seconde paroi. La surface de la première paroi présente une mouillabilité élevée pour le liquide isolant et une faible mouillabilité pour le liquide conducteur, et la surface de la seconde paroi présente une mouillabilité élevée pour le liquide conducteur et une faible mouillabilité pour le liquide isolant.

Selon un mode de réalisation de la présente invention, la surface d'au moins une des parois est revêtue d'une couche lui conférant les caractéristiques de mouillabilité recherchées.

Selon un mode de réalisation de la présente invention, la mouillabilité de la surface de la première paroi est telle que l'angle de contact d'une goutte du liquide isolant dans le liquide conducteur pour cette surface est inférieur à 75°.

Selon un mode de réalisation de la présente invention, la mouillabilité de la surface de la seconde paroi est telle que l'angle de contact d'une goutte du liquide conducteur dans le liquide isolant pour cette surface est inférieur à 75°.

Selon la présente invention, la paroi portant le liquide isolant comprend une plaque de matériau isolant revêtue d'un matériau à mouillabilité élevée pour le liquide isolant et faible mouillabilité pour le liquide conducteur, sur laquelle est posée une plaque conductrice munie d'une ouverture centrale dans laquelle est disposée le liquide isolant, cette plaque conductrice étant, du côté interne de la cellule revêtue d'un ou plusieurs matériaux propres à assurer un isolement et des propriétés de mouillabilité optimales pour le fonctionnement de la lentille.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2, décrites précédemment, sont des vues en coupe d'exemples de lentilles à focale variable selon l'art antérieur, illustrant des problèmes que l'invention cherche à résoudre ;
la figure 3 est une vue en coupe d'un mode de réalisation d'une lentille selon l'invention ; et
la figure 4 est une vue en coupe d'un exemple de monture de la lentille de la figure 3.

### Description détaillée

La figure 3 représente un mode de réalisation d'une cellule de lentille à focale variable selon la présente invention. La cellule est délimitée par deux plaques en matériaux transparents et isolants 21 et 22, orthogonalement à l'axe optique de la lentille. Selon un aspect fondamental de la présente invention, qui s'applique également à des cellules des types illustrés en figures 1 et 2, ces plaques sont constituées, ou revêtues sur leurs parois internes, de matériaux présentant des propriétés de mouillabilité spécifiques : la paroi interne de la plaque supérieure 21 devant être en contact avec le liquide conducteur présente une mouillabilité élevée pour ce liquide conducteur et une faible mouillabilité pour le liquide isolant et la paroi interne de la plaque inférieure 22 devant être en contact avec le liquide isolant présente des caractéristiques de mouillabilité inverses de la précédente.

Dans le cas courant où le liquide conducteur est un liquide aqueux et le liquide isolant est un liquide huileux, le matériau ou le revêtement de la plaque supérieure sera fortement hydrophile, et celui de la plaque inférieure sera fortement hydrophobe.

En figure 3, on a désigné un revêtement hydrophile par la référence 23 et un revêtement hydrophobe par la référence 24.

En pratique, divers matériaux à propriétés hydrophiles peuvent être utilisés. On a obtenu de bons résultats en utilisant comme surface hydrophile un verre minéral ou un polycarbonate revêtu d'oxyde de silicium.

Parmi les matériaux hydrophobes, on citera notamment le perfluoro-éthylène-propylène (FEP), le perfluoroalkoxy (PFA). Ces matériaux, transparents, peuvent constituer la paroi elle-même. D'autres matériaux peuvent également être utilisés uniquement en tant que couche de revêtement. On peut notamment citer des polymères tels que des fluoro-polymères solubles, par exemple les produits commercialisés sous la référence AF 1600 par la Société DUPONT DE NEMOURS, ou les produits commercialisés par la société CYTONIX, ou encore des couches de silanes greffées à la surface des matériaux qui donnent à ceux-ci des propriétés de mouillabilité désirées.

En pratique, on mesure la mouillabilité de la surface d'une paroi par l'angle que fait la surface de contact entre les deux fluides par rapport à la surface de la paroi. L'angle de contact est défini comme l'angle entre la surface de contact des deux fluides et la paroi solide sur laquelle s'appuie cette surface de contact. Cet angle ne dépend que de la nature des fluides considérés et de la paroi et pas de la forme de la paroi. Dans le cas où les deux fluides sont deux liquides non miscibles, une mouillabilité identique pour les deux liquides signifie que la surface de contact est sensiblement perpendiculaire à la surface de la paroi. Si la surface de la paroi présente une mouillabilité supérieure pour un de ces liquides, cela signifie que la surface de contact entre les deux liquides forme un angle aigu du côté du liquide considéré.

Ainsi, une surface peut être qualifiée d'hydrophobe si la surface périphérique de la goutte forme un angle obtus, du côté de la goutte par rapport à la surface de la paroi. A l'inverse, si cet angle est aigu, on considère que la surface est hydrophile. En règle générale, la mouillabilité d'une surface se mesure alors que deux liquides différents sont présents, la surface d'interface entre les deux liquides formant la périphérie de la goutte.

On trouvera ci-dessous un tableau récapitulatif des angles de contact représentatifs de la mouillabilité de certains matériaux utilisés en ce qui concerne les surfaces hydrophobes et hydrophiles, en combinaison avec le liquide formant la goutte caractéristique et le fluide (gaz ou liquide) environnant. Ces essais ont été réalisés en utilisant comme eau, de l'eau ultra-pure désionisée, et comme huile, une huile commercialisée par la société Exxon Mobil Chemical sous le nom ISOPAR V (CAS n°64742-46-7). Le verre utilisé en tant que surface hydrophile est un verre optique tel que celui désigné sous le sigle BK7.

| | Revêtement | Liquide goutte | Liquide environnant | Angle de contact |
|---|---|---|---|---|
| Surface hydrophobe | AF1601 (DuPont) | Eau | Air | 105° |
| | | Huile | Air | 57° |
| | | Huile | Eau | <10° |
| | 801-A (Cytonix) | Eau | Air | 104° |
| | | Huile | Air | 65° |
| | | Huile | Eau | 45° |
| Surface hydrophile | Verre | Eau | Air | <10° |

En pratique, on a obtenu de bons résultats lorsque la mouillabilité de la surface 24 de la plaque recevant la goutte d'huile est telle que l'angle de contact de l'huile dans l'eau est inférieur à 75° et que la mouillabilité de la surface 23 de la plaque en contact avec le liquide aqueux est telle que l'angle de contact de l'eau dans l'huile est inférieur à 75°.

Dans l'exemple de réalisation de la figure 3, la partie inférieure de la cellule comprend la plaque isolante 22 susmentionnée dont la surface supérieure (ou un revêtement) 24 présente les caractéristiques de mouillabilité recherchées. Une plaque 26 d'un matériau conducteur revêtu d'un revêtement isolant 27 est posée, de préférence collée, sur la plaque isolante. Le revêtement isolant 27 peut être un revêtement multicouche. Sa surface externe est telle que ses caractéristiques de mouillabilité soient optimisées pour obtenir une forme de ménisque souhaitée au repos entre le liquide isolant 31 et le liquide conducteur 32. Ainsi, selon un avantage de ce mode de réalisation, on peut dissocier les propriétés de mouillabilité du revêtement de la partie supérieure 24 de la plaque isolante 22 et les propriétés de mouillabilité de la face externe du revêtement isolant 27. Les propriétés de la couche 23 sont principalement destinées à optimiser l'adhérence de la goutte sur son support et les propriétés de la couche 27 sont principalement destinées à optimiser les caractéristiques de la fonction d'électromouillabilité.

La figure 4 illustre un exemple d'assemblage des diverses plaques de la lentille de la figure 3. Une première bague métallique 40 comporte une partie inférieure en forme de plaque 41 qui supporte les plaques isolante et conductrice inférieures 22, 26 et assure une conductivité électrique avec le matériau conducteur de la plaque 26, et une partie périphérique cylindrique 42 qui entoure la structure et est munie d'un filetage interne 44. Une deuxième bague métallique 50 comporte une partie supérieure en forme de plaque 51 qui s'appuie sur la plaque isolante supérieure 21 et assure un contact électrique avec le liquide conducteur 32, de préférence par l'intermédiaire d'un revêtement conducteur 53 prévu à la périphérie de la plaque 21. La deuxième bague métallique 50 comporte aussi une partie périphérique cylindrique 52 munie d'un filetage externe 54. La partie périphérique cylindrique 52 est interne par rapport à la partie périphérique cylindrique 42. Une première bague isolante cylindrique 60 est disposée entre la périphérie externe de la lentille et la périphérie interne de la deuxième bague conductrice 50. Une deuxième bague isolante cylindrique 70 est disposée entre les cylindres 42 et 52 et est munie de filetages interne et externe respectivement destinés à s'accoupler avec le filetage externe 54 du cylindre 52 et le filetage interne 44 du cylindre 42. Un joint torique 80 maintient un écartement entre la plaque 26 et la plaque 21. La hauteur est aussi maintenue par la longueur de la bague 60.

L'assemblage de cette structure est réalisé de la façon suivante. La cellule 21-27 est montée avec le joint 80, l'huile 31 et l'eau 32 étant en place. Ensuite, on met successivement en place la bague 40, la bague 70 vissée dans cette bague 40, la bague 60, et la bague 50 vissée dans la bague 70 de façon à serrer le joint 80 et à maintenir l'étanchéité. On pourra prévoir que les bagues conductrices 40 et 50 sont munies de filetages ou perçages pour l'insertion d'éléments de connexion et/ou de montage de la lentille sur le dispositif auquel elle doit être adaptée.

Bien entendu ceci ne représente qu'un exemple de monture possible et diverses variantes apparaîtront à l'homme de l'art. Notamment les diverses bagues pourront être munies d'épaulements de blocage. Le joint 80 et la bague isolante 60 pourront être disposés différemment ou même combinés pour autant que la fonction d'isolement entre les bagues 40 et 50, la fonction d'étanchéité, et la fonction de maintien d'un espacement entre les plaques supérieure et inférieure de la lentille soient assurées. De plus ce type de monture peut être adapté à des lentilles à focales variables autres que celle décrite en relation avec la figure 3.

Comme on l'a indiqué précédemment, la présente invention s'applique également aux exemples de réalisation des figures 1 et 2. Dans ces exemples, les matériaux des plaques 1 et 11, ou des revêtements internes de ces plaques, seront tels que les parois internes de ces plaques présentent des propriétés fortement hydrophiles. Dans le cas de la figure 2, le matériau de la plaque inférieure 12 ou un revêtement de cette plaque présentera des caractéristiques fortement hydrophobes. Dans le cas de la figure 1, on prévoira de préférence un revêtement fortement hydrophobe au fond de l'évidement 3, un revêtement optimisé pour le fonctionnement de la lentille sur les parois obliques de l'évidement et un revêtement hydrophile sur la partie périphérique plane supérieure de la plaque 2, pour éviter que la goutte d'huile n'y adhère.

D'autre part, on a représenté en figures 1 et 3 des zones de positionnement du liquide isolant en forme de cuvette à flancs plans inclinés à 45°. Diverses autres formes pourront être utilisées, par exemple cylindriques ou toriques.

Il ressort de la structure selon la présente invention que la goutte isolante aura naturellement tendance à venir se placer sur la zone fortement hydrophobe du fond de l'évidement dans le cas des figures 1 et 3, et de la plaque inférieure 12 dans le cas de la figure 2 et que, même si elle vient accidentellement en contact avec une autre surface telle que la surface de la plaque supérieure, elle n'adhérera pas à cette surface et reviendra naturellement se positionner du côté de la face inférieure.

A titre d'exemple, dans le cas de la figure 3, la partie inférieure de l'ouverture dans la plaque 26 peut avoir un diamètre de 3 à 5 mm, cette plaque ayant une épaisseur de quelques dixièmes de mm, la distance entre la plaque 26 et la plaque 21 étant également de quelques dixièmes de mm, les plaques supérieure et inférieure étant des lames de verre d'une épaisseur de l'ordre du mm.

## Revendications

1. Lentille à focale variable, comportant :
- une cellule délimitée par des première et seconde plaques (21, 22) transparentes et isolantes disposées en regard orthogonalement à l'axe de la lentille ;
- dans un espace de la cellule défini entre lesdites plaques, un liquide isolant (31) sur la première plaque (22), et un liquide conducteur (32), recouvrant le liquide isolant et venant au contact de la seconde plaque (21), la surface (24) de la première plaque (22) présentant une mouillabilité élevée pour le liquide isolant et une faible mouillabilité pour le liquide conducteur, et la surface (23) de la seconde plaque (21) présentant une mouillabilité élevée pour le liquide conducteur et une faible mouillabilité pour le liquide isolant ; et
- une plaque conductrice (26) posée sur la première plaque et munie d'une ouverture centrale dans laquelle est disposée le liquide isolant, la plaque conductrice étant, du côté interne de la cellule, revêtue d'un revêtement isolant (27) dont les caractéristiques de mouillabilité sont optimisées pour obtenir une forme de ménisque souhaitée au repos entre le liquide isolant et le liquide conducteur.

2. Lentille selon la revendication 1, dans laquelle la surface d'au moins une des plaques est revêtue d'une couche (23, 27) lui conférant les caractéristiques de mouillabilité recherchées.

3. Lentille selon la revendication 1, dans laquelle la mouillabilité de la surface (24) de la première plaque (22) est telle que l'angle de contact d'une goutte du liquide isolant dans le liquide conducteur pour cette surface est inférieur à 75°.

4. Lentille selon la revendication 1, dans laquelle la mouillabilité de la surface (23) de la seconde plaque (1, 11, 21) est telle que l'angle de contact d'une goutte du liquide conducteur dans le liquide isolant pour cette surface est inférieure à 75°.

## Claims

1. Variable-focus lens, comprising:
- a cell delimited by first and second transparent insulating plates (21, 22) disposed opposite orthogonally to the axis of the lens;
- in a space of the cell defined between the said plates, an insulating liquid (31) on the first plate (22), and a conducting liquid (32), covering the insulating liquid and coming into contact with the second plate (21), the surface (24) of the first plate (22) having a high wettability for the insulting liquid and a low wettability for the conducting liquid, and the surface (23) of the second plate (21) having a high wettability for the conducting liquid and a low wettability for the insulating liquid; and
- a conducting plate (26) placed on the first plate and provided with a central opening in which the insulating liquid is disposed, the conducting plate being, on the internal side of the cell, coated with an insulating coating (27), the wettability characteristics of which are optimized to obtain a desired meniscus shape at rest between the insulating liquid and the conducting liquid.

2. Lens according to Claim 1, in which the surface of at least one of the plates is coated with a layer (23, 27) giving it the desired wettability characteristics.

3. Lens according to Claim 1, in which the wettability of the surface (24) of the first plate (22) is such that the contact angle of a drop of the insulating liquid in the conducting liquid for this surface is less than 75°.

4. Lens according to Claim 1, in which the wettability of the surface (23) of the second plate (1, 11, 21) is such that the contact angle of a drop of the conducting liquid in the insulating liquid for this surface is less than 75°.

## Patentansprüche

1. Linse mit veränderlicher Brennweite, umfassend
- eine Zelle, die durch eine erste und eine zweite durchsichtige und isolierende Platte (21, 22) begrenzt ist, welche einander gegenüber orthogonal zu der Achse der Linse angeordnet sind,
- in einem zwischen den Platten gebildeten Zellenraum eine isolierende Flüssigkeit (31) auf der ersten Platte (22) und eine leitende Flüssigkeit (32), welche auf der isolierenden Flüssigkeit liegt und mit der zweiten Platte (21) in Kontakt tritt, wobei die Oberfläche (24) der ersten Platte (22) eine hohe Benetzbarkeit gegenüber der isolierenden Flüssigkeit und eine geringe Benetzbarkeit gegenüber der leitenden Flüssigkeit aufweist und die Oberfläche (23) der zweiten Platte (21) eine hohe Benetzbarkeit gegenüber der leitenden Flüssigkeit und eine geringe Benetzbarkeit gegenüber der isolierenden Flüssigkeit aufweist, und
- eine leitende Platte (26), die auf der ersten Platte angeordnet und mit einer mittigen Öffnung versehen ist, in der sich die isolierende Flüssigkeit befindet, wobei die leitende Platte auf der Innenseite der Zelle mit einer isolierenden Beschichtung (27) überzogen ist, deren Benetzbarkeitseigenschaften optimiert sind, um eine im Ruhezustand gewünschte Meniskusform zwischen der isolierenden Flüssigkeit und der leitenden Flüssigkeit zu erzielen.

2. Linse nach Anspruch 1, bei der die Oberfläche mindestens einer der Platten mit einer Schicht (23, 27) überzogen ist, die ihr die angestrebten Benetzbarkeitseigenschaften verleiht.

3. Linse nach Anspruch 1, bei der die Benetzbarkeit der Oberfläche (24) der ersten Platte (22) derart ist, dass der Kontaktwinkel eines Tropfens der isolierenden Flüssigkeit in der leitenden Flüssigkeit für diese Oberfläche kleiner ist als 75°.

4. Linse nach Anspruch 1, bei der die Benetzbarkeit der Oberfläche (23) der zweiten Platte (1, 11, 21) derart ist, dass der Kontaktwinkel eines Tropfens der leitenden Flüssigkeit in der isolierenden Flüssigkeit für diese Oberfläche kleiner ist als 75°.
